(19) Europäisches Patentamt

European Patent Office

Office européen des brevets

(11) **EP 1 154 050 A1**

(12) **EUROPEAN PATENT APPLICATION**

(43) Date of publication:
**14.11.2001 Bulletin 2001/46**

(51) Int Cl.[7]: **D01F 9/127**, C01B 31/00

(21) Application number: **01110523.6**

(22) Date of filing: **28.04.2001**

(84) Designated Contracting States:
**AT BE CH CY DE DK ES FI FR GB GR IE IT LI LU
MC NL PT SE TR**
Designated Extension States:
**AL LT LV MK RO SI**

(30) Priority: **13.05.2000 EP 00110092**

(71) Applicant: **Korean Carbon Black Co., Ltd.,
Degussa Group
Yosu-city, Chollanam-do (KR)**

(72) Inventors:
• **Bang, Jung-Sik
Taejon (KR)**
• **Lee, Chan-Won
Yosu, Chunranam-do (KR)**

(74) Representative: **Weber, Wolfgang, Dr.
Degussa-Hüls AG
Patente und Marken Wolfgang
Postfach 13 45
63403 Hanau (DE)**

(54) **Carbon fibrils and method for producing same**

(57) Carbon fibril characterised by having surface area of $150{\sim}500\ m^2/g$, diameter of $5{\sim}50\ nm$ and aspect ratio of $100{\sim}1000$, are produced by contacting a suitable gaseous carbon-containing compound with a suitable metal-containing particle at a temperature between 550 °C and 800 °C, the ratio on a dry weight basis of carbon containing compound to metal-containing particles being about from about 10:1 to about 30:1 by weight, the reaction pressure is between atmosphere and atmosphere + 10 mm $H_2O$. The carbon fibril can be used as filler in composites.

**Description**

This invention relates to the production of graphitic carbon fibrils. More specifically, it relates to such fibrils grown catalytically from inexpensive, readily available carbon precursors without the need for usual and expensive graphitizing temperatures (approximately 2900 °C).

Fiber-reinforced composite materials are becoming increasingly important because their mechanical properties, notably strength, stiffness and toughness, are superior to the properties of their separate components or of other noncomposite materials. Composites made from carbon fibers excel in strength and stiffness per unit weight, hence are finding rapid acceptance in aerospace and sporting goods applications. Their high cost, however, inhibits their wider use.

Carbon fibers are currently made by controlled pyrolysis of continuous filaments of precursor organic polymers, notably cellulose or polyacrylonitrile, under carefully maintained tension, needed to insure good orientation of the anisotropic sheets of carbon atoms in the final filaments. Their high cost is a consequence of the cost of the preformed organic fibers, the weight loss in carbonisation, the slow rate of carbonisation in expensive equipment and the careful handling necessary to avoid breaks in the continuous filaments.

There has been intense development of methods of spinning and carbonising hydrocarbon pitch fiber to reduce precursor filament cost and weight loss. So far, the pitch pre-treatment, spinning conditions and post-treatments needed to insure correct orientation of the sheets of carbon atoms in the final products have been nearly as expensive as the previously noted method involving organic polymers. Both methods require use of continuous filaments to achieve high orientation and best properties. There is a practical lower limit of fiber diameter, 6 to 8 micrometers, below which fiber breakage in spinning and post-treatment becomes excessive.

An entirely distinct approach to carbon fiber formation involves the preparation of carbon filaments through the catalytic decomposition at metal surfaces of a variety of carbon containing gases. e. g., $CO/H_2$, hydrocarbons, and acetone. These filaments are found in a wide variety of morphologies (e.g., straight, twisted, helical, branched) and diameters (e.g., ranging from tens of angstroms to tens of microns). Usually, a mixture of filament morphologies is obtained, frequently admixed with other, non-filamentous carbon (cf. Baker and Harris, Chemistry and Physics of Carbon Vol. 14, 1978). Frequently, the originally formed carbon filaments are coated with poorly organised thermal carbon. Only relatively straight filaments possessing relatively large graphitic domains oriented with their c-axes perpendicular to the fiber axis and possessing little or no thermal carbon overcoat will impart the properties of high strength and modulus required in reinforcement applications.

Most reports that cite formation of filamentous carbon do not document the particular type of filaments formed, so that it is impossible to determine whether the filaments are suitable for reinforcement applications. For example, Baker et al., in British Pat. No. 1,499,930 (1977), disclose that carbon filaments are formed when an acetylene or diolefin is decomposed over catalyst particles at 675°-775 °C No description of the structure of these filaments is given, however. In European Patent Application EP No. 56,004 (1982), Tates and Baker describe the formation of filamentous carbon over $FeO_x$ substrates, but again do not disclose any information concerning the structure of the carbon filaments formed. Bennett et al., in United Kingdom Atomic Energy Authority Report AERE-R 7407, describe the formation of filamentous carbon from catalytic decomposition of acetone, but also fail to give any indication of the morphology, and hence suitability for reinforcement applications, of the carbon formed.

Several groups of workers have disclosed the formation of straight carbon filaments through catalytic decomposition of hydrocarbons. Oberlin, Endo, and Koyama have reported that aromatic hydrocarbons such as benzene are converted to carbon fibers with metal catalyst particles at temperatures of around 1100 °C, Carbon 14:133 (1976). The carbon filaments contain a well ordered graphitic core of approximately the diameter of a catalyst particle, surrounded by an overcoat of less organised thermal carbon. Final filament diameters are in the range of 0.1 to 80 microns. The authors infer that the graphitic core grows rapidly and catalytically, and that thermal carbon subsequently deposits on it, but state that the two processes cannot be separated "because they are statistically concomitant". Journal of Crystal Growth 32:335 (1976). The native fibers, coated with thermal carbon, possess low strength and stiffness, and are not useful as a reinforcing filler in composites. An additional high temperature treatment at 2500°-3000 °C is necessary to convert the entire filament to highly ordered graphitic carbon. While this procedure may be an improvement on the difficult and costly pyrolysis of preformed organic fibers under tension, it suffers from the drawback that a two step process of fiber growth and high temperature graphitisation is required. In addition, the authors state nothing regarding deliberate catalyst preparation, and catalyst particles appear to be adventitious. In more recent work, preparation of catalytic particles is explored, but the two processes of catalytic core growth and thermal carbon deposition are again not separated, Extended Abstracts, 16th Biennial Conference on Carbon: 523 (1983).

In the US patent No. 4,663,230 Tennent describes a cylindrical discrete carbon fibril, with a constant diameter between about 3,5 and about 70 nanometers, an outer region of multiple layers of ordered carbon atoms and a distinct inner core region, each of the layers and core dispose concentrically about the cylindrical axis of the fibril. This carbon fibril is produced by contacting a metal-containing particle with a gaseous, carbon-containing compound at a temperature between about 850 °C and about 1.200 °C, the ratio of carbon-containing compound to metal-containing particle being at least about 100:1.

Tibbetts has described the formation of straight carbon fibers through pyrolysis of natural gas in type 304 stainless steel tubing at temperatures of 950°-1075 °C, Appl. Phys. Lett. 42(8):666 (1983). The fibers are reported to grow in two stages similar to those seen by Koyama and Endo, where the fibers first lengthen catalytically and then thicken by pyrolytic deposition of carbon. Tibbetts states that these stages are "overlapping" and is unable to grow filaments free of pyrolytically deposited carbon. In addition, Tibbett's approach is commercially impracticable for at least two reasons. First, initiation of fiber growth occurs only after slow carbonisation of the steel tube (typically about ten hours), leading to a low overall rate of fiber production. Second, the reaction tube is consumed in the fiber forming process, making commercial scale-up difficult and expensive.

In the view of commercial production of this kind of carbon material, it was produced by

1) contacting metal-containing particle which was finely dispersed ferric transition metal on alumina support of high surface and then treated in reducing condition with ethylene like hydrocarbon gas in 850~1200 °C (US 4,663,230), and

2) by passing organic metal compound of iron family metal and hydrocarbon compound in the region of 1100 °C (JP 62-49363).

The former way has an advantage of getting fine carbon fibril of high surface area with high yield, but has disadvantage of using expensive supporting material of high surface area for even dispersion of iron family transition metal, additionally it has a limit of application because it is difficult to remove alumina and iron impurities from the final product.

On the other hand, the latter way has an advantage of getting carbon whisker of high purity and crystalline, but the surface area of product and production yield are very low.

It has now unexpectedly been found that it is possible to catalytically convert hydrocarbon precursors to carbon filaments.

This invention concerns an essentially cylindrical discrete carbon fibril characterised by having surface area of 150~500 m$^2$/g, diameter of 5~50 nm and aspect ratio of 100~1000.

The fibril of this invention may be produced by contacting for an appropriate period of time and at a suitable pressure a suitable metal-containing particle with a suitable gaseous, carbon-containing compound at a temperature between 550 °C to 800 °C, more preferably 600 to 660 °C the ratio on a dry weight basis of carbon-containing compound to metal-containing particle being about from 10:1 to about 30:1 by weight, the reaction pressure is between atmosphere and atmosphere + 10 mm H$_2$O.

Another subject of this invention concerns an essentially cylindrical discrete carbon fibril characterized by having surface area of 150~500 m$^2$/g, diameter of 5~50 nm and aspect ratio of 100~1000 with inexpensive way using the support material of low surface area by contacting carbon-containing compound gas with metal-containing particle produced by adding solution of ferric and IA or IIIA family transition metallic salt to water disperse of alkaline metal oxide that maintaining the pH value from 6 to 10, drying and calcining it.

The metal-containing particle used to produce fibril of this invention may be produced by adding IA or IIIA family metal solution and iron family metal salt into water dispersion of alkaline earth metaloxide.

The surface area of alkaline metal oxide used in this invention was 0,5~20 m$^2$/g. And the surface area of calcined metal-containing particle without any side-reaction for producing fine carbon fibril has high surface area was 80~200 m$^2$/g.

The suitable IA or IIIA family metal may be Li, Na, K and A1 and iron family metal may be Fe, Ni and Co. And the suitable alkaline earth metal may be magnesia, calcia, magnesium hydroxide and calcium hydroxide. After drying precipitated slurry, it may be calcined at 420 °C to 700 °C, preferably 500 °C to 600 °C, in air. And after calcination metal-containing particle may be reduced with H2 at 420 °C to 700 °C, preferably 500 °C to 600 °C.

To make all metal-containing particle have same reaction history and reaction time unconcerned with its size and pour density, the metal-containing particle can move slowly with appropriate conveying facilities, for example Belt conveyor.

The reaction time of metal-containing particle can be from about 10 min to about 180 min to get higher catalyst yield (Pure carbon, g/Catalyst, g) from about 7 to about 15. Preferably, the reaction time can be from 60 min to 120 min.

The rate of carbon-containing compound per metal-containing particle can be from about 10:1 to about 30:1 by weight to get higher Carbon yield (Pure carbon in carbon fibril, g/C in carbon-containing compound, g x 100 %) from about 15 % to about 60 %. Preferably, the rate can be from 15:1 to 20:1.

The contacting of the metal-containing particle with the carbon-containing compound may be carried out in the presence of a compound, e.g. CO$_2$, H$_2$ or H$_2$O, capable of reaction with carbon to produce gaseous products.

Suitable carbon-containing compounds include hydrocarbons, including aromatic hydrocarbons, e.g. benzene, toluene, xylene, cumene, ethylbenzene, naphthalene, phenanthrene, anthracene or mixtures thereof; non-aromatic hydrocarbons, e.g., methane, ethane, propane, ethylene, propylene or acetylene or mixtures thereof; and oxygen-containing hydrocarbons, e.g. formaldehyde, acetaldehyde, acetone, methanol, or ethanol or mixtures thereof; and include carbon monoxide. Preferred are mixtures containing 1-butene, trans-2-butene, n-butane, iso-butane, 1.3-butadiene, 1.2-butadiene, cis-2-butene and/or iso-butene.

The suitable metal-containing particle may be an iron-, cobalt-, or nickel-containing particle having a diameter between about 3.5 and about 70 nanometers. Such particles may be supported on a chemically compatible, refractory support, e.g., a support of alumina, carbon, or a silicate, including an aluminium silicate. Preferred are oxides of iron and aluminium, which are supported on magnesium oxide.

This supported oxides may be produced by mixing a watersolution of an iron salt and an aluminiumsalt with a slurry of magnesiumoxide. The slurry is spray dried and resulting powder calcined.

In one embodiment the surface of the metal-containing particle is independently heated, e.g. by electromagnetic radiation, to a temperature between about 590 °C and 660 °C, the temperature of the gaseous, carbon-containing compound.

In a specific embodiment, the metal-containing particle is contacted with the carbon-containing compound for a period of time from about 10 seconds to about 180 minutes at a pressure of from about one-tenth atmosphere to about ten atmospheres. An essentially cylindrical carbon fibril may be produced in accordance with this invention, said fibril being characterised by an essentially cylindrical discrete carbon fibril characterised y having surface area of $150\sim500$ $m^2/g$, diameter of $5\sim50$ nm and aspect ratio of $100\sim1000$.

It is desirable that catalyst particles be of reasonably uniform diameter and that they be isolated from one another, or at least held together in only weakly bonded aggregates. The particles need not be in an active form before they enter the reactor, so long as they are readily activated through a suitable pre-treatment or under reaction conditions. The choice of a particular series of pre-treatment conditions depends on the specific catalyst and carbon-containing compound used, and may also depend on other reaction parameters outlined above. Exemplary pre-treatment conditions are provided in the Examples which follow. The metal-containing particles may be precipitated as metal oxides, hydroxides, carbonates, carboxylates, nitrates, etc., for optimum physical form. Well-known colloidal techniques for precipitating and stabilising uniform, very small particles are applicable. For example, the techniques described by Spiro et al. for precipitating hydrated ferric oxide into easily dispersable uniform spheres a few nanometers in diameter, are very suitable for catalyst preparation, J. Am. Chem. Soc. 88 (12):2721-2726 (1966); 89(22):5555-5559 and 5559-5562 (1967). These catalyst particles may be deposited on chemically compatible, refractory supports. Such supports must remain solid under reaction conditions, must not poison the catalyst, and must be easily separated from the product fibrils after they are formed. Alumina, carbon, quartz, silicates and aluminium silicates such as mullite are all suitable support materials. Preferred is magnesium oxide. For ease of removal, their preferred physical form is thin films or plates which can easily be moved into and out of the reactor.

Small metal particles may also be formed by thermolysis of metal-containing vapor in the reactor itself. For example, iron particles may be formed from ferrocene vapor. This method has the advantage that fibril growth is initiated throughout the reactor volume, giving higher productivity than when the catalyst particles are introduced on supports.

The reaction temperature must be high enough to cause the catalyst particles to be active for fibril formation, yet low enough to avoid significant thermal decomposition of the gaseous carbon-containing compound with formation of pyrolytic carbon. The precise temperature limits will depend on the specific catalyst system and gaseous carbon-containing compound used. In cases where thermal decomposition of the gaseous carbon-containing compound occurs at a temperature near or below that required for an active, fibril-producing catalyst, the catalyst particle may be heated selectively to a temperature greater than that of the gaseous carbon-containing compound. Such selective heating may be achieved, for example, by electromagnetic radiation.

The carbon fibril of this invention may be produced at any desirable pressure, and the optimum pressure will be dictated by economic considerations. Preferably, the reaction pressure is between atmosphere and atmosphere + 10 mm $H_2O$. More preferably, the reaction pressure is atmospheric pressure + $0,5\pm0,1$ mm $H_2O$.

Fibrils made according to this invention are highly graphitic as grown. The individual graphitic carbon layers are concentrically arranged around the long axis of the fiber like the growth rings of a tree, or like a scroll of hexagonal chicken wire. There is usually a hollow core a few nanometers in diameter, which may be partially or wholly filled with less organised carbon. Each carbon layer around the core may extend as much as several hundred nanometers. The spacing between adjacent layers may be determined by high resolution electron microscopy, and should be only slightly greater than the spacing observed in single crystal graphite, i. e., about 0.339 to 0.348 nanometers.

Another aspect of this invention concerns a composite which comprise carbon fibrils as described above, including composites serving as structural materials. Such as composite may also comprise a matrix of pyrolytic or non-pyrolytic carbon or an organic polymer such as a polyamide, polyester, polyether, polyimide, polyphenylene, polysulfone, polyurethane or epoxy resin, for example. Preferred embodiments include elastomers, thermoplastics and thermosets.

In another embodiment, the matrix of the composite is an inorganic polymer, e.g. a ceramic material or polymeric inorganic oxide such as glass. Preferred embodiments include fiberglass, plate glass and other molded glass, silicate ceramics, and other refractory ceramics such as aluminium-oxide, silicon carbide, silicon nitride and boron nitride.

In still another embodiment the matrix of the composite is a metal. Suitable metals include aluminium, magnesium, lead copper, tungsten, titanium, niobium, hafnium, vandium, and alloys and mixtures thereof.

The carbon fibrils are also useful in various other applications. One embodiment is a method for increasing the surface are of an electrode or electrolytic capacitor plate by attaching thereto one or more carbon fibrils of this invention. In another embodiment the fibril can be used in a method for supporting a catalyst which comprises attaching a catalyst to the fibril. Such catalyst may be an electrochemical catalyst.

The fibrils are useful in composites having a matrix of e.g., an organic polymer, an inorganic polymer or a metal. In one embodiment the fibrils are incorporated into structural materials in a method of reinforcement. In other embodiments the fibrils may be used to enhance the electrical or thermal conductivity of a material, to increase the surface area of an electrode or an electrolytic capacitor plate, to provide a support for a catalyst, or to shield an object from electromagnetic radiation.

The carbon fibrils are also useful in a method of enhancing the electrical conductivity of a material. According to this method an effective electrical conductivity enhancing amount of carbon fibrils is incorporated in the material.

A further use of the carbon fibrils is in a method of enhancing the thermal conductivity of a material. In this method an effective thermal conductivity enhancing amount of carbon fibrils is incorporated in the material.

An additional use of the carbon fibrils is in a method of shielding an object from electromagnetic radiation. In this method an effective shielding amount of carbon fibrils is incorporated in the object.

This invention is illustrated in the examples which follow. The examples are set forth to aid in an understanding of the invention but are not intended to, and should not be construed to, limit in any way the invention as set forth in the claims which follow thereafter.

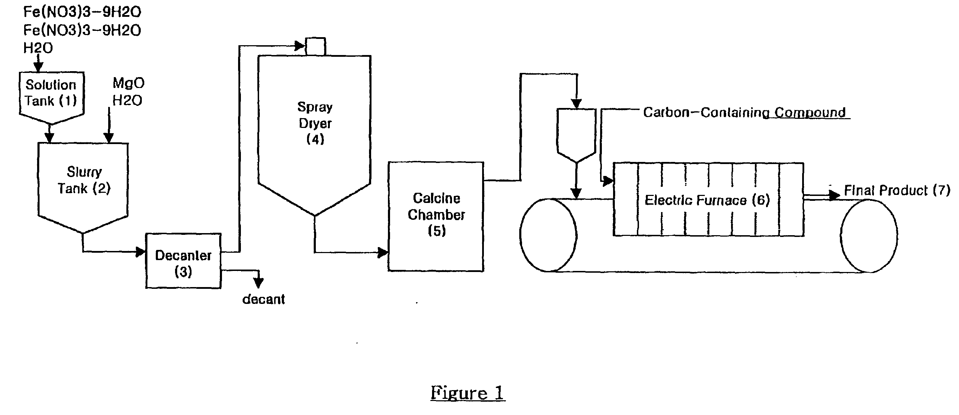

The invention is explained by the drawings. Figure 1 shows the flow-sheet of the method according to the invention. According to Figure 1 solutions of iron salts and aluminium salts in water are mixed in the solution tank 1. In the slurry tank 2 a slurry of magnesiumoxid in water is mixed with the solution of iron and aluminium salts coming from tank 1.

The mixture is decanted in vessel 3 and then spray dried in the spray drier 4. The resulting powder is calcined and used as a catalyst to produce the carbon fibrils in the electric furnace 6. The carbon fibrils are collected at the end of the electric furnace 6.

Example

A solution of Fe $(NO_3)3$ 9 $H_2O$ in water is mixed with a solution of A1 $(NO_3)3$ $9H_2O$ in water. This mixture is mixed with a slurry of magnesiumoxide. The mixture is decanted and than spray dried in hot air at a temperature of 200 °C The resulting powder is then calcined in air at a temperature of 510 °C.

The resulting powder is a magnesiumoxide covered with oxides of aluminium and iron. The powder shows the standard formulation

$$wt\ \%\ Fe_2O_3 : Al_2O_3 : MgO = 1,8 : 0,186 : 1$$

Whereby the ratio of $Fe_2O_3$ and $Al_2O_3$ can be varied (controlled) in the needs of its electrical conductivity in the ranges of

$$wt\ \%\ Fe2O3 : MgO = 1,26 \sim 2,16 : 1$$

$$wt\ \%\ Al2O3 : MgO = 1,149 \sim 0,223 : 1$$

The magnesiumoxide used shows an aggregate size distribution, whereby more than 95 % are passing at the 200 mesh screen.

The magnesiumoxide covered with the oxides of iron and aluminium are used as catalyst to produce the carbon fibrils.

The reaction temperature is controlled according to the reaction velocity. (Reaction velocity is influenced by conveyor speed, load of raw materials (catalyst & Raffinate gas) and so on). The reactor is divided into several sections, and the reaction temperature is differentiated at each section.

In the initial section (1st zone: HCC reactor has total 8 zones), the temperature is diminished about 10~20 °C from the reaction temperature for the preventing of Raffinate gas from its quick decomposition.

In the reaction section (2nd~7th zone), the temperature is set same level to all the reaction zone. The standard level is 620 °C, and it can be controlled from 550 °C to 800 °C.

In the final section (8th zone), the temperature is diminished about 50 °C from the reaction temperature for the encapsulation of Fe active size. It is important to encapsulate all the Fe active site before packing because unencapsulated Fe site can be oxidised with oxygen in atmosphere even in the room temperature. It can cause fire.

There are two kinds of yield in HCC production. One is 'Catalyst yield' and the other is 'Carbon yield' that is the yield of C4 Raffinate.

The 'Catalyst yield' of HCC is,

$$\text{Pure Carbon, g / Catalyst, g = 10.}$$

So about 90 g of catalyst is used for 1 kg of HCC production. It can varied from 83 to 125 g per 1 kg HCC (HCC consist of pure carbon and metallic catalyst).

And 'Carbon yield' is like this,

$$\text{C in HCC(pure carbon)/C in C4 Raffinate 100 (\%)= 40 \%.}$$

About 1000 L of C4 Raffinate gas (it is equal to 2,5 kg Raffinate liquid) is used for 1 kg of HCC. And it can be varied from 840 to 1400 L according to the yield.

The pressure in furnace is slightly higher than atmospheric pressure. The range of operating condition is 0,1~1,0 mm $H_2O$ and the standard level is about 0,5±0,1 mm $H_2O$. (The data is 'Relative pressure'.)

If the pressure goes to under zero, atmosphere ($O_2$) can flow in the reactor, and if the pressure goes to over 0,7 mm $H_2O$, the carbon of C4 Raffinade would decompose not to solid carbon but to 'fume' like decant oil. The 'fume' prevents Fe particles of catalyst from reacting with gaseous carbon.

The analysis sheet (certificate) of Raffinate gas from maker (LG Petrochem.) when put it into the storage tank is shown in table 1.

Table 1

| C4 RAFFINATE-II | | U-FB-112C | |
|---|---|---|---|
| COMPONENTS | UNIT | TEST METHOD | TEST RESULT |
| Sp. Gr (60/60 °F) | - | ASTM D-1657 | 0.6020 |
| C3 & LIGHTER | wt. ppm | GAS CHRD. | 270 |
| so-BUTANE | wt. % | GAS CHRD. | 3.03 |
| nor-BUTANE | wt. % | GAS CHRD. | 15.92 |
| 1-BUTENE | wt. % | GAS CHRD. | 40.26 |
| iso-BUTENE | wt. % | GAS CHRD. | 2.98 |
| trans-2-BUTENE | wt. % | GAS CHRD. | 12.20 |
| cis-2-BUTENE | wt. % | GAS CHRD. | 18.55 |
| 1,3 BUTADIENE | wt. % | GAS CHRD. | 4.55 |
| 1,2 BUTADIENE | wt. % | GAS CHRD. | 0.31 |
| ETHYL ACETYLENE | wt. % | GAS CHRD. | 0.45 |
| VINYL ACETYLENE | wt. ppm | GAS CHRD. | 200 |
| C5 & HEAVIER | wt. ppm | GAS CHRD. | 310 |
| WATER | wt. ppm | ASTM D-1364 | 110 |
| DIMETHYL ETHER | wt. % | GAS CHRO. | 0.12 |

Table 1   (continued)

| C4 RAFFINATE-II | | U-FB-112C | |
|---|---|---|---|
| COMPONENTS | UNIT | TEST METHOD | TEST RESULT |
| TERTIARY BUTYL CATECHOL | wt. ppm | ASTM D-1157 | 3 |

**Claims**

1. An essentially cylindrical discrete carbon fibril **characterised by** having surface area of 150~500 $m^2$/g, diameter of 5~50 nm and aspect ratio of 100~1000.

2. A method for producing an essentially cylindrical discrete carbon fibril according to claim 1, which comprises contacting for an appropriate period time and at a suitable pressure a suitable gaseous, carbon-containing compound with a suitable metal-containing particle at a temperature between 550 °C and 800 °C, the ratio on a dry weight basis of carbon-containing compound to metal-containing particles being about from about 10:1 to about 30:1 by weight, the reaction pressure is between atmosphere and atmosphere + 10 mm $H_2O$.

3. An essentially cylindrical discrete carbon fibril **characterized by** having surface area of 150~500 $m^2$/g, diameter of 5~50 nm and aspect ratio of 100~1000 $m^2$/g by contacting carbon-containing compound gas with metal-containing particle produced by adding solution of ferric and IA or IIIA family transition metallic salt to water disperse of alkaline metal oxide maintaining the pH value from 6 to 10, drying and calcining it.

Fe(NO3)3-9H2O
Fe(NO3)3-9H2O
H2O

MgO
H2O

Solution Tank (1)

Slurry Tank (2)

Decanter (3)

decant

Spray Dryer (4)

Calcine Chamber (5)

Carbon-Containing Compound

Electric Furnace (6)

Final Product (7)

Figure 1

## DOCUMENTS CONSIDERED TO BE RELEVANT

**European Patent Office**

**EUROPEAN SEARCH REPORT**

**Application Number**

EP 01 11 0523

| Category | Citation of document with indication, where appropriate, of relevant passages | Relevant to claim | CLASSIFICATION OF THE APPLICATION (Int.Cl.7) |
|---|---|---|---|
| X | EP 0 205 556 B (HYPERION CATALYSIS INT) 10 May 1995 (1995-05-10) * page 2, line 14 - page 5, line 51; claims * --- | 1,2 | D01F9/127 C01B31/00 |
| X | US 5 877 110 A (TRUESDALE LARRY K ET AL) 2 March 1999 (1999-03-02) * column 3, line 42 - line 65; claims * ----- | 1,2 | |

**TECHNICAL FIELDS SEARCHED** (Int.Cl.7)

D01F
C01B

The present search report has been drawn up for all claims

| Place of search | Date of completion of the search | Examiner |
|---|---|---|
| THE HAGUE | 23 August 2001 | Tarrida Torrell, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
........................................................................
& : member of the same patent family, corresponding document

EPO FORM 1503 03.82 (P04C01)

**ANNEX TO THE EUROPEAN SEARCH REPORT
ON EUROPEAN PATENT APPLICATION NO.**            EP 01 11 0523

This annex lists the patent family members relating to the patent documents cited in the above-mentioned European search report.
The members are as contained in the European Patent Office EDP file on
The European Patent Office is in no way liable for these particulars which are merely given for the purpose of information.

23-08-2001

| Patent document cited in search report | | Publication date | Patent family member(s) | | Publication date |
|---|---|---|---|---|---|
| EP 0205556 | B | 30-12-1986 | US | 4663230 A | 05-05-1987 |
| | | | AT | 122406 T | 15-05-1995 |
| | | | AU | 590239 B | 02-11-1989 |
| | | | AU | 5205886 A | 01-07-1986 |
| | | | BR | 8507114 A | 31-03-1987 |
| | | | CA | 1284857 A | 18-06-1991 |
| | | | DE | 3588016 D | 14-06-1995 |
| | | | DK | 376286 A | 06-08-1986 |
| | | | EP | 0205556 A | 30-12-1986 |
| | | | FI | 863200 A,B, | 05-08-1986 |
| | | | IL | 77210 A | 05-11-1990 |
| | | | JP | 2588626 B | 05-03-1997 |
| | | | JP | 3174018 A | 29-07-1991 |
| | | | JP | 2641712 B | 20-08-1997 |
| | | | JP | 8027279 A | 30-01-1996 |
| | | | JP | 3064606 B | 07-10-1991 |
| | | | JP | 62500943 T | 16-04-1987 |
| | | | NO | 173514 C | 22-12-1993 |
| | | | WO | 8603455 A | 19-06-1986 |
| | | | US | 5611964 A | 18-03-1997 |
| | | | US | 5877110 A | 02-03-1999 |
| | | | US | 6235674 B | 22-05-2001 |
| | | | US | 5578543 A | 26-11-1996 |
| | | | US | 5650370 A | 22-07-1997 |
| | | | US | 5589152 A | 31-12-1996 |
| | | | US | 5500200 A | 19-03-1996 |
| | | | US | 5171560 A | 15-12-1992 |
| | | | US | 5165909 A | 24-11-1992 |
| | | | US | 5707916 A | 13-01-1998 |
| | | | ZA | 8509293 A | 27-08-1986 |
| | | | KR | 9008329 B | 15-11-1990 |
| US 5877110 | A | 02-03-1999 | US | 5707916 A | 13-01-1998 |
| | | | US | 4663230 A | 05-05-1987 |
| | | | AT | 192514 T | 15-05-2000 |
| | | | AU | 661705 B | 03-08-1995 |
| | | | AU | 2217792 A | 28-01-1993 |
| | | | AU | 3182189 A | 25-08-1989 |
| | | | AU | 689654 B | 02-04-1998 |
| | | | AU | 3663995 A | 15-02-1996 |
| | | | BR | 8905294 A | 21-08-1990 |
| | | | CA | 1338304 A | 07-05-1996 |
| | | | CA | 2005642 A | 16-06-1990 |
| | | | DE | 68929201 D | 08-06-2000 |
| | | | DE | 68929201 T | 02-11-2000 |
| | | | DK | 477089 A | 27-09-1989 |

For more details about this annex : see Official Journal of the European Patent Office, No. 12/82

## ANNEX TO THE EUROPEAN SEARCH REPORT
## ON EUROPEAN PATENT APPLICATION NO.

EP 01 11 0523

This annex lists the patent family members relating to the patent documents cited in the above-mentioned European search report.
The members are as contained in the European Patent Office EDP file on
The European Patent Office is in no way liable for these particulars which are merely given for the purpose of information.

23-08-2001

| Patent document cited in search report | Publication date | Patent family member(s) | | Publication date |
|---|---|---|---|---|
| US 5877110 A | | EP | 0353296 A | 07-02-1990 |
| | | EP | 0619388 A | 12-10-1994 |
| | | EP | 0969128 A | 05-01-2000 |
| | | FI | 894585 A | 27-09-1989 |
| | | IL | 89092 A | 24-06-1994 |
| | | IL | 109062 A | 31-10-1996 |
| | | JP | 10121334 A | 12-05-1998 |
| | | JP | 3024697 B | 21-03-2000 |
| | | JP | 10121335 A | 12-05-1998 |
| | | JP | 2503334 T | 11-10-1990 |
| | | JP | 2982819 B | 29-11-1999 |
| | | KR | 9615658 B | 20-11-1996 |
| | | NO | 304660 B | 25-01-1999 |
| | | WO | 8907163 A | 10-08-1989 |
| | | US | 5611964 A | 18-03-1997 |
| | | US | 5500200 A | 19-03-1996 |
| | | ZA | 8900679 A | 29-11-1989 |
| | | AT | 141862 T | 15-09-1996 |
| | | AU | 637429 B | 27-05-1993 |
| | | AU | 6666090 A | 24-01-1991 |
| | | AU | 600505 B | 16-08-1990 |
| | | AU | 7703287 A | 11-01-1988 |
| | | CA | 1321863 A | 07-09-1993 |
| | | DE | 3751885 D | 02-10-1996 |
| | | DE | 270666 T | 24-11-1988 |
| | | DK | 54288 A | 03-02-1988 |
| | | EP | 0270666 A | 15-06-1988 |
| | | FI | 880546 A | 05-02-1988 |
| | | IL | 82787 A | 21-06-1992 |
| | | JP | 2862227 B | 03-03-1999 |
| | | JP | 8199431 A | 06-08-1996 |
| | | JP | 2860276 B | 24-02-1999 |
| | | JP | 8246249 A | 24-09-1996 |
| | | JP | 2788213 B | 20-08-1998 |
| | | JP | 8246308 A | 24-09-1996 |
| | | JP | 1131251 A | 24-05-1989 |

EPO FORM P0459

For more details about this annex : see Official Journal of the European Patent Office, No. 12/82